# EUROPEAN PATENT APPLICATION

(11) **EP 1 657 639 A1**
(43) Date of publication of application: **17.05.2006**
(21) Application number: 05256947.2
(22) Date of filing: 10.11.2005
(51) Int. Cl.: G06F 9/445

(54) **Outdoor-unit software upgrade system and method**

(30) Priority: 16.11.2004 KR 2004093670
(71) Applicant: LG Electronics, Inc., Seoul 150-010 (KR)
(72) Inventor: Kim, Ki-burn, Seoul (KR); Kang, Won-chul, Seoul (KR); Hwang, Il-nahm, Suji-gu,Yongin-si, Gyeonggi-do (KR); Yoon, Seok-ho, Giheung-gu,Yongin-si, Gyeonggi-do (KR); Sung, Si-kyong, Guro-gu Seoul (KR)
(74) Representative: Camp, Ronald

(57) **Abstract**

An outdoor-unit software upgrade system includes: a software upgrade application which is an application program installed in a computer terminal and transmits outdoor-unit upgrade software, which is stored in a storage unit and selected by a user, to a data output port; a first wireless communication unit which is coupled with the data output port, packtizes and wirelessly transmits the outdoor-unit upgrade software data outputted from the data output port; and a second wireless communication unit which receives packet data from the first wireless communication unit set to be connected to the second wireless communication unit, converts the packet data into the outdoor-unit upgrade software data, and transmits the outdoor-unit upgrade software data to a controller mounted on a main board of an outdoor unit.

## Description

The present invention relates to a system air-conditioner. It more particularly relates, to a method and system for upgrading software of an outdoor unit incorporated in an air-conditioner.

System air-conditioners are air-conditioning facilities which have been widely used in developed countries such as Europe and Japan and were introduced to Korea in the early 90's . The demand for the system air-conditioners has sharply increased with increasing interest in indoor environments and increasing numbers of high-rise high-class apartments since the mid 90's.

A system air-conditioner, also called multi-type air-conditioner, is a heating and cooling system in which a single outdoor unit is connected to a plurality of indoor units via refrigerant duct means. The system air-conditioner requires no subsidiary mechanical equipment such as machine rooms or cooling tower facilities typically used in a central air-conditioning system. Accordingly, there is an advantage in that the building cost is low and an operator is not necessary to handle the system air-conditioner since it is easy to handle and to use.

The system air-conditioner keeps monitoring the conditions of a plurality of indoor units or distributors through a single outdoor unit and upgrades outdoor-unit software according to system users' requests and changes in installation environments to provide optimum air-conditioning performance. The outdoor-unit software is stored in a memory of the outdoor unit and accessed by a controller.

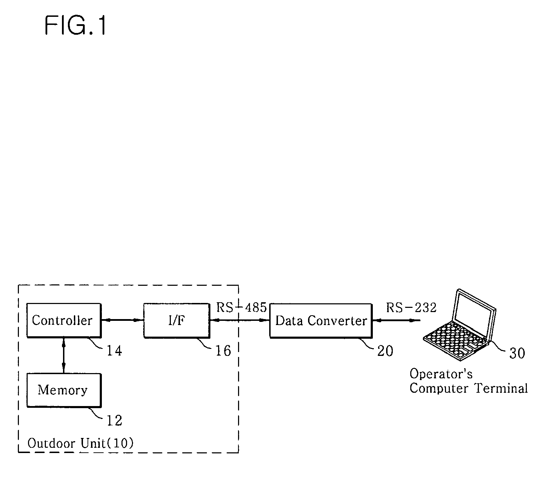

A typical method of upgrading software of the outdoor unit incorporated in a system air-conditioner will now be described with reference to FIG. 1.

To upgrade the outdoor-unit software, an operator connects an interface unit 16 of the outdoor unit 10 and a data converter 20 to each other via a cable, and connects the data converter 20 and an operator' s terminal 30 to each other via another serial cable. The data converter 20 is responsible for conversion between serial type communications protocols (i.e., between RS-485andRS-232) so that data can be normally transferred between the controller 14 of the outdoor unit 10 and the operator's terminal 30.

After a data transfer path has been established between the outdoor unit 10 and the operator's terminal 30 through the cable connection, the operator runs a software upgrade application installed in the operator's terminal 30 to transmit the outdoor-unit software to the outdoor unit 10. The controller 14 records the software downloaded from the operator's terminal 30 on the memory 12 and controls operation of the outdoor unit 10 based on program data constituting the software recorded on the memory 12.

However, the above-mentioned method of upgrading software of the outdoor unit 10 of the system air-conditioner has the following disadvantages:
1) The operator needs to connect the outdoor unit 10 and the operator' s terminal 30 to each other via a cable to establish a data transfer path. Accordingly, there is a disadvantage in that cases of the outdoor-unit 10 and circuit units have to be repeatedly opened and closed to connect the cable each time the upgrading operation is performed.
2) The operator needs to operate at a place as close as possible to the outdoor unit 10 for signal reliability since signal quality deteriorates as the cable gets longer.

The present invention provides an improved outdoor-unit software upgrade system and method.

According to an aspect of the present invention, there is provided an outdoor-unit software upgrade system able to make a wireless communication with a computer terminal, the system comprising: a wireless communication unit on an outdoor unit side arranged to receive outdoor-unit upgrade software data from a wireless communication unit of the computer terminal; and a controller on the outdoor unit side arranged to store the outdoor-unit upgrade software data outputted from the wireless communication unit on the outdoor unit side and to upgrade the outdoor-unit software.

According to another aspect of the present invention, there is provided an outdoor-unit software upgrade system comprising: a software upgrade application comprising an application program installed in a computer terminal and arranged to transmit outdoor-unit upgrade software, which is stored in a storage unit and selected by a user, to a data output port; a first wireless communication unit which is coupled with the data output port, and arranged to packetize and wirelessly transmit the outdoor-unit upgrade software data outputted from the data output port; anda second wireless communication unit arranged to receive packet data from the first wireless communication unit set to be connected to the second wireless communication unit, to convert the packet data into the outdoor-unit upgrade software data, and to transmit the outdoor-unit upgrade software data to a controller mounted on a main board of an outdoor unit.

According to the above aspects of the present invention, since the software upgrade application installed in the computer terminal can wirelessly transmit the outdoor-unit software data stored in storage means of the computer to the outdoor unit via the first wireless communication unit, embodiments of the present invention are advantageous over the prior art system in which the outdoor-unit software is upgraded via cables.

The outdoor-unit software upgrade system may further comprise second wireless communication units arranged to receive the outdoor-unit upgrade software data from the first wireless communication unit and to transmit the outdoor-unit upgrade software data to a controller mounted on a main board of another outdoor unit.

According to the above aspect of the present invention, the second wireless communication units may set connections with the first wireless communication unit and download the outdoor-unit software, whereby the first wireless communication unit may upgrade software installed in a plurality of outdoor-units conveniently and rapidly.

Embodiments of the invention will now be described by way of non-limiting example only, with reference to the drawings, in which:
FIG. 1 is a block diagram showing a construction of a system for use in upgrading outdoor-unit software of a system air-conditioner;
FIG. 2 is a block diagram showing an outdoor-unit software upgrade system in accordance with an embodiment of the present invention; and
FIG. 3 is a flow chart showing an outdoor-unit software upgrade method in accordance with an embodiment of the present invention.

In the following description, a detailed description of well-known functions and configurations incorporated here in will be omitted when it may make the subject matter of the present invention rather unclear.

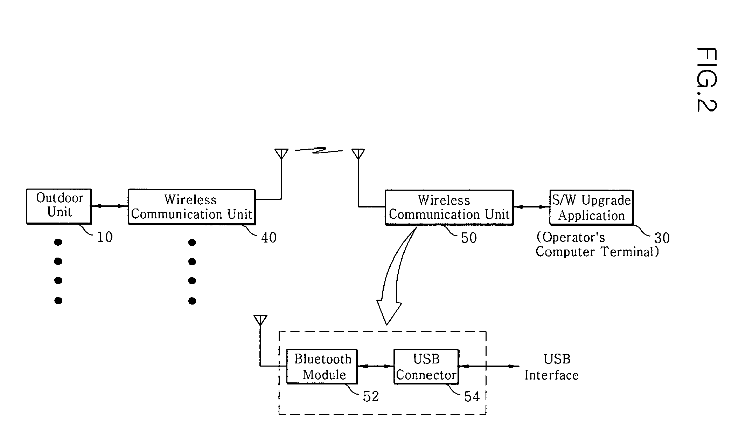

As shown in FIG. 2, a software upgrade system for an outdoor unit of an air conditioner according to an embodiment of the present invention includes two wireless communication units 40, 5 0 and a software upgrade appl icat ion 3 0 installed in an operator's computer terminal.

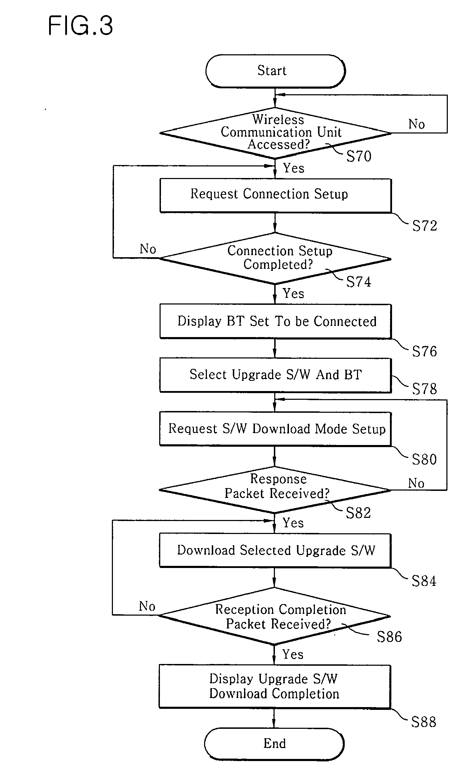

The software upgrade application 30 transmits outdoor-unit upgrade software stored in a storage unit selected by a user to a data output port (more specifically in the present non-limiting embodiment, a USB interface). The software upgrade application 30 implies control programdata configured to perform operations shown in FIG. 3, which will be described below in detail with reference to FIG. 3.

The wireless communication unit 50 located on a terminal side, which corresponds to a master, can be coupled to a data output port of the operator's computer terminal. The wireless communication unit 50 packetizes and wirelessly transmits outdoor-unit upgrade software data. The wireless communication unit 50 includes a USB connector 54 for coupling with USB represented as the data output port, and a Bluetooth (BT) module 52 which packetizes the outdoor-unit upgrade software data transmitted through the USB connector 54 into data conforming to Bluetooth standards and transmits the packetized data in a wireless manner.

For reference, the Bluetooth module 52 enables communications with Bluetooth devices conforming to Bluetooth standards. The Bluetooth modules transmit/receive message packets to/from each other via Host Control Interface (HCI) defined therebetween, thereby transmitting/receiving control commands and user data. The wireless communication unit 50 may be realized with a local area wireless communication unit and a typical RF module.

The wireless communication unit 40 located on the outdoor unit side receives and converts the packet data transmitted from the master-side wireless communication unit 50 into the outdoor-unit upgrade software data, and transmits it to a controller 14 on a main board of the outdoor unit 10. The wireless communication unit 40 maybe realized as a built-in type Bluetooth module mounted on a main board of the outdoor unit 10 to directly interface with the interface unit 16 shown in FIG. 1. Alternatively, the wireless communication unit 40 maybe realized as a stand-alone type module. The stand-alone type wireless communication unit 40 includes a Bluetooth module which receives and converts packet data transmitted from the wireless communication unit 50 located on the computer terminal side into outdoor-unit upgrade software data, and a serial interface unit which transmits the outdoor-unit upgrade software data to the interface unit 16 on the main board located on the outdoor unit side. The wireless communication unit 40 located on the outdoor unit side may be considered to be a slave which corresponds to the master.

Although it has been described above that a single outdoor unit 10 accesses a single master wireless communication unit 50 via a slave wireless communication unit 40, a plurality of outdoor units may access a single master wireless communication unit 50 via the respective slave wireless communication units. In this case, there is an advantage in that a single master wireless communication unit can upgrade a plurality of outdoor-unit software conveniently and rapidly.

A process of upgrading the outdoor-unit software will now be described in more detail with reference to FIG. 3. It is assumed in the following description that the wireless communication unit 40 located on the outdoor unit side is a slave Bluetooth module mounted on the outdoor unit 10, and various upgrade software data is already stored in a storage unit (e.g. , HDD) of the computer terminal.

To upgrade the outdoor-unit software, an operator first connects the wireless communication unit 50 corresponding to a master to a data output port of the operator' s computer terminal, i.e. , to a USB interface unit, and runs a software upgrade application. A computer controller, which controls the operator's computer terminal according to the software upgrade application, checks whether or not the wireless communication unit 50 has accessed to the data output port (step S70). If the wireless communication unit 50 is determined to have accessed, the computer controller requests the operator to input a connection setup command according to the software upgrade application.

If the operator inputs the connection setup command, the computer controller requests connection setup with slaves from a Bluetooth module in the wireless communication unit 50 (hereinafter referred to as "master Bluetooth module") (step S72). The master Bluetooth module 52 enters an inquiry mode to acquire addresses of slave Bluetooth modules located within a communication radius, and then switches to a page mode to set connections with the slave Bluetooth modules located within the communication radius using the acquired addresses. Through this process, connections are set between the slave Bluetooth modules mounted on the outdoor unit 10 and the master Bluetooth module 52.

Meanwhile, once connections are set between the slave Bluetooth modules located within the communication radius and the master Bluetooth module (step S74) , the computer controller receives identification information on Bluetooth modules, which are set to be connected with the master Bluetooth module, from the master Bluetooth module 52, and displays the identification information on a monitor (step S76) to allow the operator to select outdoor units to be upgraded. If the operator selects the software to be upgraded and the slave Bluetooth modules (step S78), the computer controller requests the slave Bluetooth modules selected by the operator to set a software download mode (step S80). This request is transmitted in command packet format via the master Bluetooth module 52.

The slave Bluetooth module having received the software download mode setup request changes an operating mode in response to the request and transmits response packets to the request to the master side. Accordingly, the computer controller can determine in step S82 whether or not the response packets are received from the slave side. If the response packets are determined to be normally received, the computer controller reads out the upgrade software data selected by the operator from the storage unit and downloads the upgrade software data to the slave Bluetooth modules set to the download mode (step S84).

The upgrade software downloaded to the slave Bluetooth module is recorded on the memory 12 via the interface unit 16 mounted on the main board of the outdoor unit 10. After the upgrade software is downloaded, the slave Bluetooth module transmits a reception completion packet to the master Bluetooth module. Thus, in step S86, the computer controller can check whether or not the reception completion packet is received from the slave Bluetooth module, and also determine through information on the size of the received data contained in the reception completion packet whether or not the software data is normally downloaded. If the reception completion packet is received from the slave Bluetooth module, the computer controller displays, on the monitor, information indicating that the upgrade software has been completely downloaded (step S88).

Accordingly, the operator can confirm that the upgrade software has been normally downloaded to the selected outdoor unit 10. In addition, the controller 14 located on the outdoor unit side can analyze the downloaded upgrade software and upgrade the software. As a result, it is possible to upgrade the outdoor-unit software without the need to use cables.

As apparent from the above description, the software upgrade application installed in the computer terminal can wirelessly transmit outdoor-unit software data stored in a storage unit of the computer terminal to the outdoor unit side via a wireless communication unit. Accordingly, it is possible to perform a software upgrade process conveniently and rapidly compared to the conventional method of upgrading the outdoor-unit software via cables.

Further, according to the present invention, a plurality of slave wireless communication units can receive the outdoor-unit software through connections with a master wireless communication unit. Accordingly, the master wireless communication unit canupgrade software incorporated in the slave wireless communication units conveniently and rapidly, thereby increasing reliability of the software upgrade system.

While the present invention has been described with reference to exemplary embodiments thereof, it will be understood by those skilled in the art that various changes in form and details may be made therein without departing from the scope of the present invention as defined by the following claims.

## Claims

1. An outdoor-unit software upgrade system able to make a wireless communication with a computer terminal, the system comprising:
a wireless communication unit on an outdoor unit side arranged to receive outdoor-unit upgrade software data from a wireless communication unit of the computer terminal; and
a controller on the outdoor unit side arranged to store the outdoor-unit upgrade software data outputted from the wireless communication unit on the outdoor unit side and to upgrade the outdoor-unit software.

2. The outdoor-unit software upgrade system of claim 1, wherein the wireless communication unit on the outdoor unit side is mounted on a main board of the outdoor unit.

3. The outdoor-unit software upgrade system of claim 1, wherein the wireless communication unit on the outdoor unit side is a stand-alone type module and comprises:
a Bluetooth module arranged to receive packet data from the wireless communication unit of the computer terminal and to convert the received packet data into the outdoor-unit upgrade software data; and
a serial interface unit arranged to transmit the converted outdoor-unit upgrade software data to the main board of the outdoor unit.

4. An outdoor-unit software upgrade system comprising:
a software upgrade application comprising an application program installed in a computer terminal and arranged to transmit outdoor-unit upgrade software, which is stored in a storage unit and selected by a user, to a data output port;
a first wireless communication unit which is coupled with the data output port, arranged to packtize and wirelessly transmit the outdoor-unit upgrade software data outputted from the data output port; and
a second wireless communication unit arranged to receive packet data from the first wireless communication unit set to be connected to the second wireless communication unit, to convert the packet data into the outdoor-unit upgrade software data, and to transmit the outdoor-unit upgrade software data to a controller mounted on a main board of an outdoor unit.

5. The outdoor-unit software upgrade system of claim 4, further comprising second wireless communication units arranged to receive the outdoor-unit upgrade software data from the first wireless communication unit and to transmit the outdoor-unit upgrade software data to a controller mounted on a main board of another outdoor unit.

6. The outdoor-unit software upgrade system of claim 4 or 5, wherein the first wireless communication unit includes:
a USB connector which is coupled with the data output port; and
a Bluetooth module arranged to packetize the outdoor-unit upgrade software data transmitted through the USB connector into data conforming to Bluetooth standards and to transmit it wirelessly.

7. The outdoor-unit software upgrade system of claim 4 or 5, wherein the second wireless communication unit is a stand-alone type module and includes:
a Bluetooth module arranged to receive packet data from the first wireless communication unit set to be connected to the second wireless communication unit and to convert the received packet data into the outdoor-unit upgrade software data; and
a serial interface unit arranged to transmit the converted outdoor-unit upgrade software data to the main board of the outdoor unit.

8. The outdoor-unit software upgrade system of claim 4 or 5, wherein the second wireless communication unit is mounted on the main board of the outdoor unit.

9. The outdoor-unit software upgrade system of claim 4 or 5, wherein the software upgrade application is control program data arranged to sequentially perform the steps of:
controlling connection setup between the first wireless communication unit and the second wireless communication unit;
displaying identification information on the second wireless communication unit set to be connected to the first wireless communication unit;
requesting setting of a software download mode from the second wireless communication unit on the outdoor unit side selected by an operator;
downloading upgrade software data to the second wireless communication unit on the outdoor unit side which is set to the software download mode; and
displaying whether or not the upgrade software data is completely downloaded according to whether or not there is a received packet indicating that the upgrade software data has been completely received.

10. An outdoor-unit software upgrade method that is executable in a computer terminal, the method comprising the steps of:
setting a connection with a wireless communication unit on an outdoor unit side;
downloading upgrade software data to the wireless communication unit on the outdoor unit side which is set to be connected; and
displaying whether or not the upgrade software data is completely downloaded according to whether or not there is a received packet indicating that the upgrade software data has been completely received.

11. An outdoor-unit software upgrade method that is executable in a computer terminal transmitting/receiving data through a Bluetooth module to/from a slave Bluetooth module on an outdoor unit side, the method comprising the steps of:
setting a connection with a slave Bluetooth module on an outdoor unit side;
displaying identification information on the slave Bluetooth module on the outdoor unit side which is set to be connected;
requesting setting of a software download mode from the slave Bluetooth module on the outdoor unit side selected by an operator;
downloading upgrade software data to the slave Bluetooth module on the outdoor unit side which is set to the software download mode; and
displaying whether or not the upgrade software data is completely downloaded according to whether or not there is a received packet indicating that the upgrade software data has been completely received.
